Europäisches Patentamt

(19) European Patent Office

Office européen des brevets

(11) Publication number: **0 098 914**
A2

(12) **EUROPEAN PATENT APPLICATION**

(21) Application number: **83102044.1**

(22) Date of filing: **03.03.83**

(51) Int. Cl.³: **F 16 K 1/44**

(30) Priority: **14.07.82 IT 2241182 U**

(43) Date of publication of application:
**25.01.84 Bulletin 84/4**

(84) Designated Contracting States:
**BE DE FR GB LU NL**

(71) Applicant: **C.P.F. S.p.A.**
**Via Montesuello 235**
**I-25067 Lumezzane S.S. (Brescia)(IT)**

(72) Inventor: **Leo, Leonardo**
**Via Carlo Zima 147**
**I-25067 Lumezzane S.S. Brescia(IT)**

(74) Representative: **Modiano, Guido et al,**
**MODIANO, JOSIF, PISANTY & STAUB Modiano &**
**Associati Via Meravigli, 16**
**I-20123 Milan(IT)**

(54) Double seal valve for pressurized tanks.

㊼ The valve comprises a body (20) adapted for association with a tank and defining, on the interior thereof, a through-going bore channel (4) controlled by a double seal shutter (10) which defines, at the inner end thereof, a lower sealing element (11) of substantially frustoconical shape and engageable with an annular abutment rim (12) defined at the inner end of the throughgoing channel (4). The valve further comprises an upper sealing element (21) provided with a frustoconical seal (23) engageable with an annular shoulder (25) defined in the throughgoing channel and being effective to be coupled to the lower sealing element (11) for mutually guiding the respective movements in the axial direction.

Fig.1

EP 0 098 914 A2

COMPLETE DOCUMENT

This invention relates to a double seal valve particularly useful for pressurized tanks.

As is known, it is current practice to provide, at the fill fittings of pressurized tanks, and the like, double seal valves which, in their broadest constructional aspect, comprise a shutter arranged to slide within the throughgoing bore of the valve body against the bias of elastic means; said shutter generally includes an internally located cup-like sealing member which, owing to the action of elastic means and in normal conditions, is urged against an annular rim defined by the valve body to provide a tight closure.

During the tank filling step, the pressure of the fluid being supplied overcomes the bias of the elastic means and displaces the shutter, thus moving the cup away from the sealing rim and leaving an annular passage for the oncoming fluid.

With the above arrangement, it occurs that the cup induces a significant deflection in the oncoming fluid flow, which results in the creation of a fluid inlet port having a configuration which may be likened essentially to an umbrella-like configuration, in that the provision of the sealing cup deflects the fluid flow along radial directions.

This creates a significant hydraulic drag opposing the inflow of fluid, which results in the tank filling time with the fluid being lengthened, with attendant adverse effects on the tank performance.

Accordingly the task of this invention is to reduce the pressure drop and significantly increase the tank filling rate, by providing a double seal valve structure which allows in practice the elimination of section area narrowings from the fluid inlet port to the tank, while ensuring a much more limited deflection of the fluid flow than hitherto feasible.

Within this task it is an object of the invention to provide a valve structure, wherein the shutter translatory movement is guided true, thus eliminating altogether any risks of the valve jamming or otherwise failing to perform its function.

It is a further object of this invention to provide a double seal valve which is specially designed for pressurized tanks, and can give full assurance of reliable and safe operation.

According to one aspect of the invention the above task and objects as well as yet other objects, such as will be apparent hereinafter, are achieved by a double seal valve structure, particularly for pressurized tanks and the like applications, comprising a body adapted for association with a tank and defining, on the interior thereof, a throughgoing bore channel controlled by a double seal shutter, characterized in that said shutter defines, at the inner end thereof, a lower sealing element of substantially frustoconical shape and engageable with an annular abutment rim defined at the inner end of said throughgoing bore channel.

Further features and advantages will be more clearly understood from the following detailed description of a double seal valve structure particularly for pressurized tanks and the like applications, as illustrated by way of example and not of limitation in the accompanying drawing, where:

Figure 1 is the double seal valve according to the invention, shown in axial section and in its closed position; and

Figure 2 shows this double seal valve, partly in section and in its open position, i.e. during the filling step with the pressurized fluid.

Making reference to the drawing figures, the double seal valve structure particularly for pressurized tanks and the like applications, according to the invention, comprises a body, generally indicated at 1, which defines at the bottom a threaded mouthpiece 2 for its tight coupling to a tank, generally indicated at 3.

The cited body 1 defines on its interior a throughgoing bore channel 4 for admitting the fluid to the pressurized tank inside.

At the top, that is at the outer end of the body 1, a closure cap 5 can be provided which has, on its interior, an annular rim 6 adapted to act, as usual, on a sealing gasket 7.

The throughgoing bore channel 4 is controlled by a shutter, generally designated with the reference numeral 10, which is elastically biased to occupy a

- 5 -

0098914

closed position in normal conditions and to translate against an elastic means as the fluid flow is admitted to the tank inside.

More in detail, the cited shutter 10 has a lower sealing element 11, which has a substantially frustoconical shape adapted to engage in fluid tight relationship with an annular abutment rim 12 defined inside the throughgoing bore channel 4, in the proximity of the inner end thereof.

From the lower sealing element 11, there extends a stem 13 which is guided for sliding movement inside a star-like element 14 connected to the inner walls of the bore channel 4. The stem 13 is terminated at the top with a cylindrical widening 15, on which a first spring 16 is arranged to act, which acts with its other end on a central recess 17 defined by the star-like element 14.

The cylindrical widening 15 is slidably accommodated inside the cylindrical body 20 of an upper sealing element 21 which has, above the cylindrical body 20, four spokes 22 guiding the axial sliding movement inside the bore 4, and a frustoconical seal 23 adapted for engagement with a shoulder 25 defined inside the bore 4.

Also provided are elastic means comprising a second spring 30 which acts between the second element 21 and cited star-like element 14.

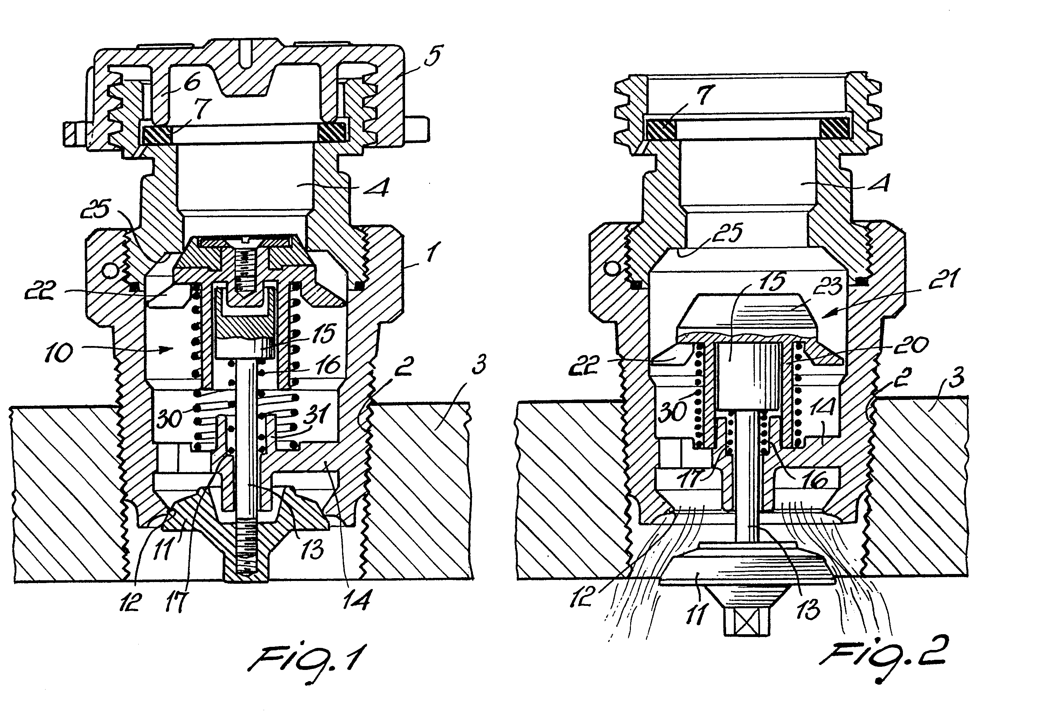

In the rest or inoperative condition, as shown in Figure 1, the upper sealing element 21 has its frustoconical seal engaged tightly against the annular shoulder 25, under the thrust of the second spring 30, and the lower sealing element 11 is seated at the annular abutment rim 12 because the first spring 16 holds it in the raised position.

Moreover, the tight seal is enhanced by the pressure inside the tank, which will urge the seals against their respective seats, thus improving the sealing effect.

As the tank is filled with a pressurized fluid, the pressure of the fluid inflow initially urges the upper sealing element 21 and causes the translation thereof downwards, overcoming the elastic bias of the second spring 30; after completing an initial downward movement translation, the upper sealing element presses against the cylindrical boss 15 and, hence, will urge the lower sealing element 11 downwards disengaging it from its annular abutment rim.

It occurs in practice that the two seals are independent of each other and cooperate together in guiding the sliding movement true to the axial direction.

It should be also noted that, as the pressure moves the upper sealing element 21 downwards, its cylindrical body 20 inserts itself at an axial collar 31 defined by the star-like element 14, such as to hold it properly in place.

Furthermore, the frustoconical shape provided for the lower sealing element instead of the traditional cup-like configuration, affords the possibility of creating a very large passage port, with a minimal deflection in the flow direction of the oncoming fluid.

Another important aspect is that the lower sealing element and upper sealing element guide each other in their axial sliding movement, while performing that movement independently of each other, thereby a perfectly tight sealing action is achieved at two discrete locations.

It will be appreciated from the foregoing that the invention achieves its objects, and in particular that a double seal valve is provided which, by virtue of its particular construction, is substantially free of any jamming risks, while affording the possibility of providing a large passage port during the tank filling step and thus preventing hydraulic drag from slowing down the fluid inflow.

In practicing the invention, the materials used, on condition that they are compatible with the intended application, and the dimensions and contingent shapes may be any ones meeting the individual applicational requirements.

## C L A I M S

1. A double seal valve structure, particularly for pressurized tanks and the like applications, comprising a body adapted for association with a tank and defining, on the interior thereof, a throughgoing bore channel controlled by a double seal shutter, characterized in that said shutter (10) defines, at the inner end thereof, a lower sealing element (11) of substantially frustoconical shape and engageable with an annular abutment rim (12) defined at the inner end of said throughgoing bore channel (4).

2. A double seal valve structure, particularly for pressurized tanks and the like applications, according to Claim 1, characterized in that it comprises an upper sealing element (21) having a frustoconical seal (23) engageable with an annular shoulder (25) defined in said throughgoing bore channel (4), said lower sealing element (11) and said upper sealing element (21) being mutually coupleable for mutually guiding the respective sliding movements in the axial direction.

3. A double seal valve structure, particularly for pressurized tanks and the like applications, according to the preceding claims, characterized in that said lower sealing element (11) has a stem (13) extending axially and being guided for sliding movement inside a star-like element (14) provided in said throughgoing bore channel (4), said stem (13) having at the top end thereof a cylindrical widening (15) slindingly accommodated inside a cylindrical body provided at the the bottom of said upper sealing element (21).

4. A double seal valve structure, particularly for pressurized tanks and the like applications, according to one or more of the preceding claims, characterized in that it comprises a first spring (16) acting between said cylindrical widening (15) and said star-like element (14), and a second spring (30) acting between said upper sealing element (21) and said star-like element (14).

5. A double seal valve structure, particularly for pressurized tanks and the like applications, according to one or more of the preceding claims, characterized in that said upper sealing element (21) has radial spokes (22) for guiding the axial sliding movement in said bore channel (4).

6. A double seal valve structure, particularly for pressurized tanks and the like applications, according to one or more of the preceding claims, characterized in that it comprises, located on said star-like element (14), an axial collar (31) adapted for engagement with the inner end of said cylindrical body (20) to guide in position said upper sealing element (21) during the tank filling with pressurized fluid.

7. A double seal valve structure, particularly for pressurized tanks and the like applications, according to one or more of the preceding claims, characterized in that during the tank filling step with pressurized fluid said upper sealing element (21) acts, in the translatory movement thereof, with an axial thrust on said cylindrical boss (15) to open said lower sealing element (11) against the bias force of said first spring (16).

8. A double seal valve structure, particularly for pressurized tanks and the like applications, according to the preceding claims, substantially as herein described and illustrated.

Fig.1

Fig.2